# EUROPEAN PATENT SPECIFICATION

(11) **EP 4 664 089 B1**
(45) Date of publication and mention of the grant of the patent: **12.08.2026**
(21) Application number: 25178956.6
(22) Date of filing: 27.05.2025
(51) Int. Cl.: G01M 15/11

(54) **MISFIRE DETECTION DEVICE AND MISFIRE DETECTION METHOD OF INTERNAL COMBUSTION ENGINE**
FEHLZÜNDUNGSERKENNUNGSVORRICHTUNG UND FEHLZÜNDUNGSERKENNUNGSVERFAHREN FÜR EINEN VERBRENNUNGSMOTOR
DISPOSITIF DE DÉTECTION DE RATÉ D'ALLUMAGE ET PROCÉDÉ DE DÉTECTION DE RATÉ D'ALLUMAGE D'UN MOTEUR À COMBUSTION INTERNE

(30) Priority: 14.06.2024 JP 2024096463
(43) Date of publication of application: 17.12.2025
(73) Proprietor: MIKUNI CORPORATION, Chiyoda-ku Tokyo 101-0021 (JP)
(72) Inventor: SATO, Norio, Kanagawa, 250-0055 (JP); MATSUNAGA, Manabu, Kanagawa, 250-0055 (JP)
(74) Representative: SSM Sandmair

(56) References cited:
- US-A- 5 747 679
- US-A- 5 861 553
- US-A1- 2017 299 468

## Description

### BACKGROUND OF THE INVENTION

### Field of the Invention

The present invention relates to a misfire detection device and a misfire detection method of an internal combustion engine.

### Description of the Related Art

In an internal combustion engine in which respective processes of intake, compression, combustion, and exhaust are performed in a cylinder due to rotation of a crank shaft, a misfire may be caused by an ignition error in the cylinder. Japanese Patent Laid-Open No. S58-19532 discloses a misfire detection method of detecting a rotation speed difference of the crank shaft between a time after an expansion process or a latter stage of the expansion process and a time before the expansion process or an early stage of the expansion process, and detecting a time when the rotation speed difference is equal to or smaller than a set value as a misfire.

There is known a crank position sensor that outputs a crank angle signal synchronized with a rotation angle of the crank shaft. A control unit of a vehicle is configured to be able to receive a plurality of crank angle signals output from the crank position sensor, and detect a plurality of inter-signal times as reception intervals of the crank angle signals. Conventionally, the inter-signal times are detected in the respective processes of intake, compression, combustion, and exhaust, and a misfire is detected when the inter-signal time in each process does not fall within a predetermined range.

US 5 747 679 A provides a method for detecting combustion misfires which is independent of the mechanical inaccuracy of the transducer wheel.

US 5 861 553 A relates to a method for detecting combustion misfires in an internal combustion engine as utilized for driving motor vehicles.

US 2017/299468 A1 relates to a misfire determination device of an engine in which explosion occurs at unequal (irregular) intervals.

### SUMMARY OF THE INVENTION

In the conventional art described above, the rotation speed difference of the crank shaft described above and the inter-signal time detected by the crank position sensor need to be observed in all of the processes of intake, compression, combustion, and exhaust. When a disturbance is caused such as an acceleration operation, a deceleration operation, a clutch operation, or a shift operation of the vehicle, or variation of a road surface due to level differences, parameters used for detecting a misfire, that is, the rotation speed difference of the crank shaft and the inter-signal time detected by the crank position sensor described above, are also varied. Thus, when such a disturbance is caused, control for prohibiting misfire detection is typically performed to prevent erroneous detection of a misfire. However, it is extremely difficult to perform control for prohibiting misfire detection at all times when a disturbance is caused while estimating all disturbances that cause erroneous detection of a misfire in advance. Thus, there is a demand for detecting a misfire with low cost and high accuracy by reducing influence of a disturbance as much as possible in misfire detection.

The present invention is made in view of such a problem, and an object of the present invention is to provide a misfire detection device and a misfire detection method of an internal combustion engine with which a misfire can be detected with low cost and high accuracy by reducing influence of a disturbance as much as possible in misfire detection.

To achieve the object described above, the misfire detection device of the internal combustion engine according to the present invention is defined in independent claim 1. The corresponding dependent claims are directed to advantageous embodiments.

The misfire detection method of the internal combustion engine according to the present invention is defined in independent claim 4. The corresponding dependent claims are directed to advantageous embodiments.

The invention is set out by the appended set of claims. The embodiments and/or examples of the following description which are not covered by the claims, are provided for illustrative purpose only and are only intended to assist the reader in understanding the present invention. However, such embodiments and/or examples which are not covered by the claims do not form part of the present invention that is solely defined by the claims. With the misfire detection device and the misfire detection method of the internal combustion engine according to the present invention, a misfire can be detected with low cost and high accuracy by reducing influence of a disturbance as much as possible in misfire detection.

### BRIEF DESCRIPTION OF THE DRAWINGS

FIG. 1 is a system configuration diagram including a misfire detection device according to an embodiment of the present invention;
FIG. 2 is a graph indicating chronological changes of an inter-signal time in respective processes of intake, compression, combustion, and exhaust of an engine;
FIG. 3 is a table indicating changes of the inter-signal time in the combustion process corresponding to crank numbers both at a normal time and a misfire time;
FIG. 4 is a graph based on the table in FIG. 3;
FIG. 5 is a flowchart for explaining a misfire detection method according to an embodiment of the present invention;
FIG. 6 is a table indicating changes of the inter-signal time in the combustion process both at a normal time and a misfire time of a second cylinder in a case where the engine includes two cylinders; and
FIG. 7 is a graph based on the tables in FIG. 3 and FIG. 6.

### DETAILED DESCRIPTION OF THE INVENTION

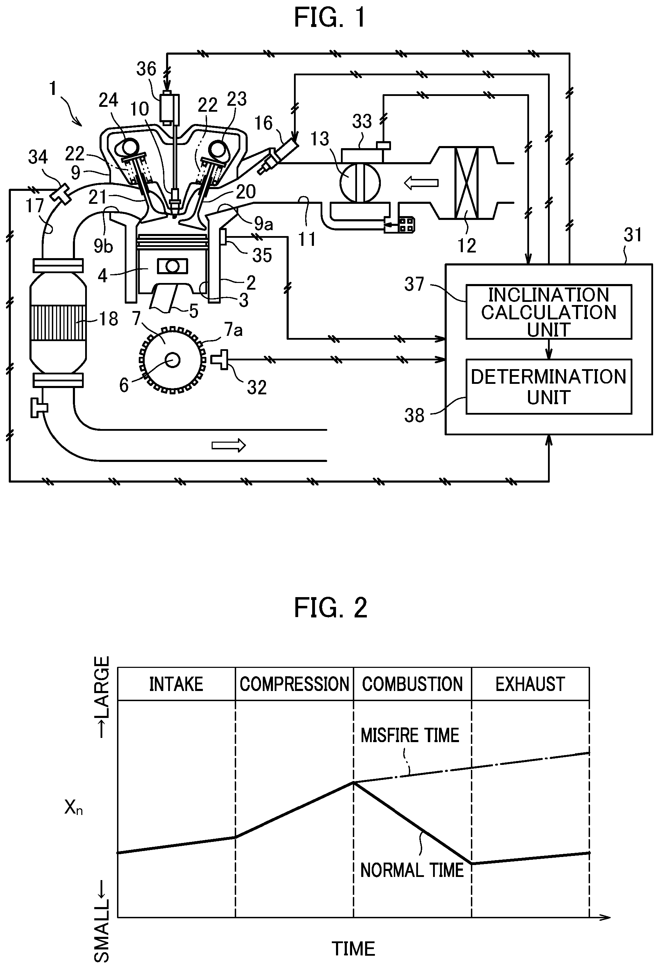

The following describes a misfire detection device and a misfire detection method of an internal combustion engine according to the present invention with reference to the drawings. FIG. 1 illustrates a system configuration diagram including the misfire detection device according to an embodiment of the present invention. An engine 1 as an internal combustion engine illustrated in FIG. 1 is configured as a four-cycle single cylinder gasoline engine of 50 cc displacement, and mounted on a two-wheeled vehicle, for example, as a power source for traveling. A piston 4 is disposed in a slidable manner in a cylinder 3 formed in a cylinder block 2 of the engine 1. The piston 4 is coupled to a crank shaft 6 via a connecting rod 5, and the crank shaft 6 rotates in conjunction with a reciprocating motion of the piston 4. A flywheel 7 is attached to a rear end (on a transmission side, not illustrated) of the crank shaft 6, and a large number of projection-shaped reluctors 7a for detecting a rotation angle (crank angle) of the crank shaft are formed at predetermined positions on an outer circumference of the flywheel 7.

On a cylinder head 9 fixed onto the cylinder block 2, an intake port 9a and an exhaust port 9b are formed, and an ignition plug 10 is disposed so that a front end thereof is oriented toward the inside of the cylinder 3. In an intake passage 11 connected to the intake port 9a, an air cleaner 12, a throttle valve 13, and an injector 16 are disposed in order from an upstream side. The throttle valve 13 is opened or closed in accordance with a throttle operation by a driver. The injector 16 injects fuel toward the intake port 9a. In an exhaust passage 17 connected to the exhaust port 9b, a three-way catalyst 18 for cleaning exhaust gas and a muffler (not illustrated) are disposed.

An intake valve 20 is disposed in the intake port 9a, and an exhaust valve 21 is disposed in the exhaust port 9b. These intake/exhaust valves 20 and 21 are energized toward a valve closing side by a valve spring 22, and opened by an intake camshaft 23 and an exhaust camshaft 24 that are rotated and driven in synchronization with the crank shaft 6 on the cylinder head 9. Due to this, the intake valve 20 and the exhaust valve 21 are opened or closed at a predetermined timing synchronized with reciprocating motion of the piston 4, and a combustion cycle of the engine 1 including four processes of intake, compression, combustion (expansion), and exhaust is repeated at each crank angle of 720°CA. Fuel (gasoline) stored in a fuel tank (not illustrated) is supplied to the injector 16 by a fuel pump (not illustrated), and the fuel is injected toward the intake port 9a at a predetermined injection timing and injection amount in accordance with valve opening of the injector 16.

During operation of the engine 1, outside air is sucked into the intake passage 11 via the air cleaner 12 due to a negative pressure caused by lowering of the piston 4 in the intake process. After a flow rate of the sucked air is adjusted in accordance with an opening of the throttle valve 13, the sucked air flows into the cylinder 3 of the engine 1 during opening of the intake valve 20 while being mixed with the injected fuel from the injector 16. Through compression in the subsequent compression process, a mixture is ignited by the ignition plug 10 near a compression top dead center, and combusts in the combustion process to give rotational force to the crank shaft 6 via the piston 4. In the subsequent exhaust process, an exhaust gas after combustion is discharged from the cylinder 3 during opening of the exhaust valve 21, and discharged to the outside through the three-way catalyst 18 and the muffler while circulating in the exhaust passage 17.

The combustion cycle of the engine 1 described above is performed based on control by an ECU 31 (control unit). To an input side of the ECU 31, various sensors such as a crank position sensor 32, a throttle sensor 33, an O₂ sensor 34, and a water temperature sensor 35 are connected. The crank position sensor 32 is disposed to be opposed to the flywheel 7, and detects a crank angle signal Sₙ (described later) synchronized with the reluctor 7a. The throttle sensor 33 detects an opening of the throttle valve 13. The O₂ sensor 34 is disposed in the exhaust passage 17, and varies an output in a stepwise manner in accordance with variation of an exhaust air-fuel ratio centered on stoichiometry (theoretical air-fuel ratio). The water temperature sensor 35 detects a cooling water temperature Tw of the engine 1. To an output side of the ECU 31, various devices such as the injector 16, the fuel pump, and an igniter 36 for driving the ignition plug 10 are connected.

The ECU 31 performs, based on information of these sensors, various kinds of control such as fuel injection control for driving the injector 16, ignition timing control for driving the ignition plug 10, and pump control for driving the fuel pump, and operates the engine 1. For example, as the fuel injection control, the ECU 31 determines a target fuel injection amount based on an engine rotation speed Ne calculated from a signal of the crank position sensor 32, a throttle opening θth detected by the throttle sensor 33, and the like, and drives the injector 16 at a predetermined timing synchronized with the combustion cycle of the engine 1 to perform fuel injection.

The ECU 31 determines, as the ignition timing control, a target ignition timing based on the engine rotation speed Ne, the throttle opening θth, and the like while generating the crank angle signal Sₙ having a rectangular wave shape synchronized with the reluctor 7a (in other words, a crank angle) by performing waveform shaping for the signal of the crank position sensor 32. The ECU 31 then specifies a timing corresponding to the target ignition timing based on the crank angle signal Sₙ, and drives the igniter 36 to ignite the ignition plug 10. Herein, the ECU 31 calculates, based on a plurality of the crank angle signals Sn detected by the crank position sensor 32, a plurality of inter-signal times Xₙ as reception intervals of the crank angle signals Sn. Furthermore, the ECU 31 incorporates an inclination calculation unit 37 and a determination unit 38 as described later in detail.

FIG. 2 illustrates, as a graph, chronological changes of the inter-signal time Xₙ in the respective processes of intake, compression, combustion, and exhaust of the engine 1. At a normal time when a misfire is not caused, the inter-signal time Xₙ changes in each process as indicated by a solid line in FIG. 2. Particularly, in the combustion process, a rotation speed of the crank shaft 6 is increased as a result of performing fuel combustion in the cylinder 3, in other words, the inter-signal time Xₙ is shortened due to the increase of the number of revolutions of the engine, and a graph line of the combustion process at the normal time has negative inclination. On the other hand, when a misfire is caused, the rotation speed of the crank shaft 6 is reduced in the combustion process as a result of not performing fuel combustion in the cylinder 3, in other words, the inter-signal time Xₙ is lengthened due to the reduction of the number of revolutions of the engine, and the graph line of the combustion process has positive inclination as indicated by a dot-dash line in FIG. 2. The misfire detection device according to the present embodiment focuses on an obvious difference in the inter-signal time Xₙ between the normal time and the misfire time in the combustion process, and detects presence/absence of a misfire in the cylinder 3 based on each inter-signal time Xₙ only in the combustion process.

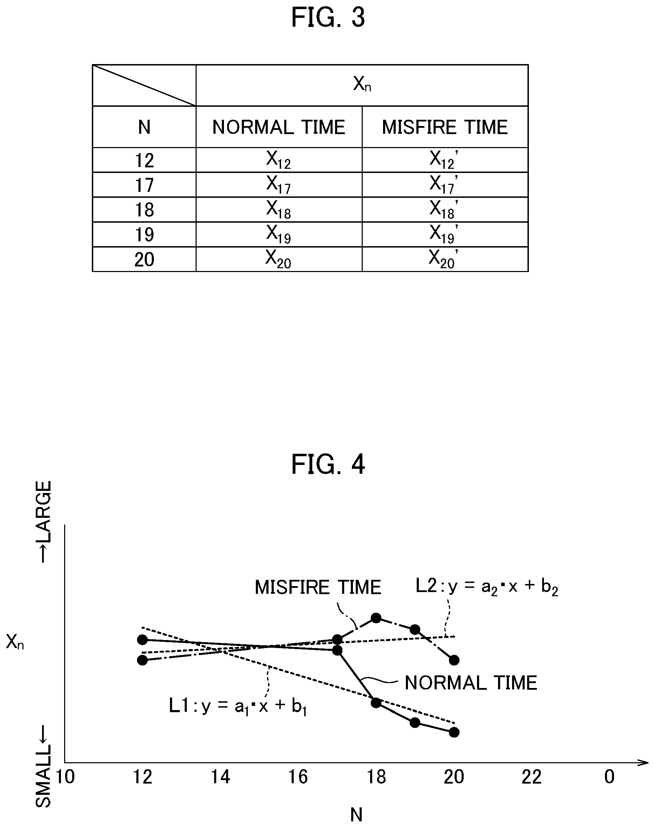

FIG. 3 illustrates, as a table, changes of the inter-signal time Xₙ in the combustion process both at the normal time and the misfire time, and FIG. 4 illustrates a graph based on the table in FIG. 3. FIG. 4 represents the graph line of the combustion process illustrated in FIG. 2 in more detail based on the data of the table in FIG. 3. Crank numbers N from 0 to 23 corresponding to crank angles are specified, and crank angle signals S_{0 to 23} corresponding to the respective crank numbers 0 to 23 are specified. For example, the crank number 0 corresponds to the crank angle of 0 degrees, the crank number 1 corresponds to the crank angle of 15 degrees, the crank number 12 corresponds to the crank angle of 180 degrees, and the crank number 23 corresponds to the crank angle of 345 degrees. The ECU 31 receives the crank angle signal Sₙ corresponding to each crank number N in each process from the crank position sensor 32.

In the present embodiment, the crank angle signals S_{12, 17, 18, 19, 20} corresponding to the crank numbers 12, 17, 18, 19, and 20 in the combustion process are used for misfire detection. As illustrated in FIG. 3, the inter-signal times Xₙ at the normal time when receiving the crank angle signal S_{12, 17, 18, 19, 20} are X_{12, 17, 18, 19, 20}, respectively. On the other hand, the inter-signal times Xₙ at the misfire time when receiving the crank angle signals S_{12, 17, 18, 19, 20} are X'_{12, 17, 18, 19, 20}, respectively. As illustrated in FIG. 4, the inclination calculation unit 37 incorporated in the ECU 31 creates a linear regression line L when plotting each inter-signal time Xₙ in the combustion process by a method of least squares, and calculates an inclination a of the linear regression line L thereafter. The method of least squares is a method of obtaining the most probable relational expression of the linear regression line by performing an arithmetic operation so that a sum of squares of an error is minimum in processing of a measurement value with an error. This method itself is well known, so that detailed description thereof is not provided.

When the number of times when the inclination a of the linear regression line L calculated by the inclination calculation unit 37 is equal to or larger than a predetermined threshold aₛ (number of times of misfire detection) n is equal to or larger than a predetermined number of times nₛ, the determination unit 38 incorporated in the ECU 31 determines that a misfire is caused. Specifically, as indicated by a dashed line in FIG. 4, a linear regression line L1 at the normal time is represented by an expression of y = a₁·X + b₁. On the other hand, a linear regression line L2 at the misfire time is represented by an expression of y = a₂·X + b₂ as indicated by a dashed line in FIG. 4. An inclination a₁ is calculated from a linear regression line when being plotted with each inter-signal time Xₙ as a vertical axis and a time during which the crank number N chronologically changes as a horizontal axis. In the present embodiment, the inclination a₁ is a negative value, and an inclination a₂ is a positive value. However, the embodiment is not limited thereto. The inclinations a₁ and a₂ may be changed into any of the positive and negative values in accordance with selection of the crank angle signal Sₙ used for misfire detection. Thus, the threshold aₛ is at least set to an appropriate value between the inclination a₁ at the normal time and the inclination a₂ at the misfire time with which a misfire can be securely detected.

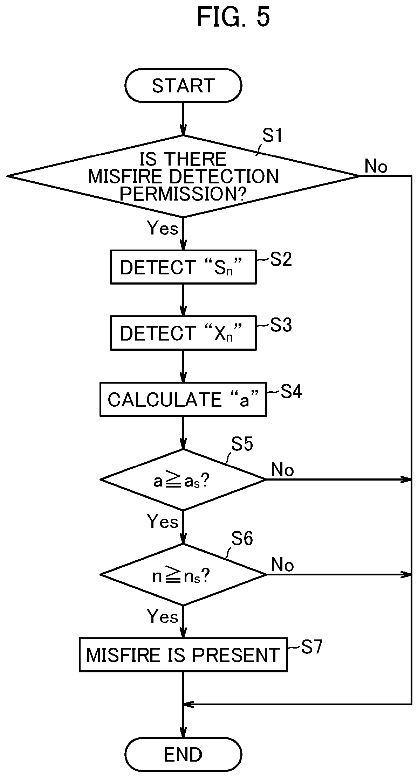

FIG. 5 illustrates a flowchart for explaining a misfire detection method according to an embodiment of the present invention. When the ECU 31 starts to perform misfire detection, first, it is determined whether there is misfire detection permission in step S1. The misfire detection permission is output based on specific conditions under which misfire detection is permitted based on laws and regulations, for example, conditions such as an elevation at which a vehicle is positioned, atmospheric pressure, the number of revolutions of the engine, and the crank position sensor 32 without a fault. While the process proceeds to step S2 when a determination result is Yes and there is the misfire detection permission, the misfire detection is ended when the determination result is No and there is no misfire detection permission. Next, in step S2, the crank position sensor 32 detects a rotation angle of the crank shaft 6, that is, the crank angle signal Sₙ synchronized with the crank angle (crank angle signal detection step). Next, in step S3, the ECU 31 calculates a plurality of the inter-signal times Xₙ as reception intervals of the crank angle signal Sₙ based on a plurality of the crank angle signals Sₙ detected in the crank angle signal detection step (inter-signal time calculation step).

Next, in step S4, after creating the linear regression line L when plotting each inter-signal time Xₙ in the combustion process by the method of least squares, the inclination calculation unit 37 calculates the inclination a of the linear regression line L (inclination calculation step). Next, in step S5, the determination unit 38 determines whether the inclination a of the linear regression line L calculated in the inclination calculation step is equal to or larger than the predetermined threshold aₛ (determination step). When the determination result is Yes and a ≥ aₛ is satisfied, the process proceeds to step S6. On the other hand, when the determination result is No and a ≥ aₛ is not satisfied, it is determined that a misfire has not been caused, and the misfire detection is ended.

Next, in step S6, it is determined whether the number of times when a ≥ aₛ is satisfied, that is, the number of times of misfire detection N, is equal to or larger than the predetermined number of times Nₛ (step of determining the number of times of misfire detection). When the determination result is Yes and N ≥ Nₛ is satisfied, it is determined that a misfire is caused, the process proceeds to step S7 to output "misfire is present", and the misfire detection is ended. If it is determined that a misfire is present, an appropriate measure is performed such that a fault warning lamp is blinked, or the engine 1 is stopped. On the other hand, when the determination result is No and N ≥ Nₛ is not satisfied, although a misfire is temporarily detected, it is determined that a misfire is not practically caused, and the misfire detection is ended. In this way, in the determination step S5, presence/absence of a misfire is determined based on each inter-signal time Xₙ in the combustion process used for calculating the inclination a of the linear regression line L in the combustion process. That is, in the present embodiment, the inter-signal times Xₙ in the respective processes of intake, compression, and exhaust other than the combustion process are not used for determining a misfire.

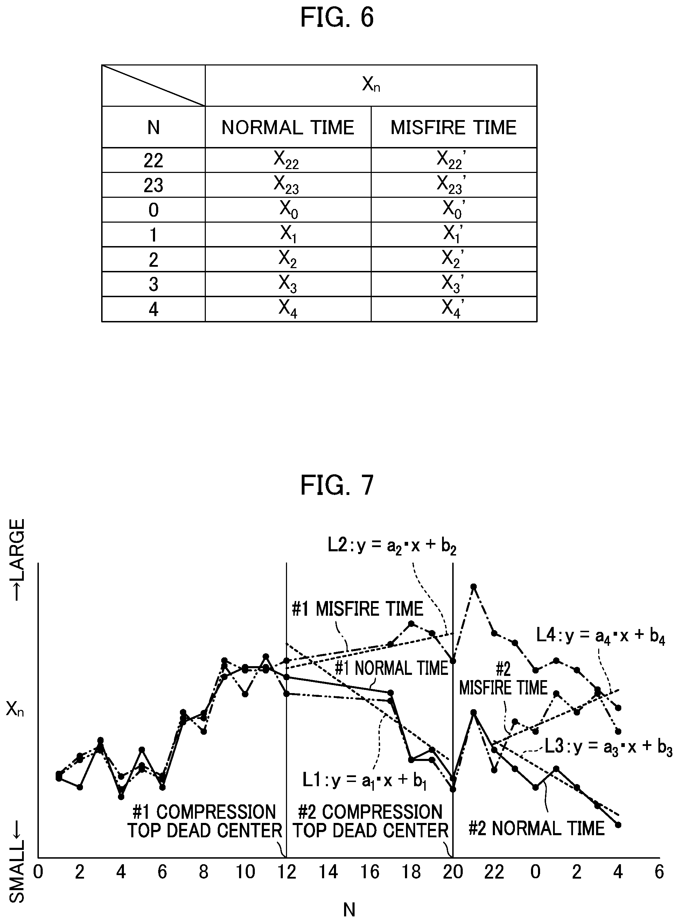

FIG. 6 illustrates, in a case where the engine 1 includes two cylinders (hereinafter, referred to as a first cylinder 3A and a second cylinder 3B), changes of the inter-signal time Xₙ in the combustion process both at the normal time and the misfire time of the second cylinder 3B as a table. FIG. 7 illustrates a graph based on the tables in FIG. 3 and FIG. 6. The inter-signal time Xₙ in the combustion process of the first cylinder 3A changes similarly to the values in the table illustrated in FIG. 3, and FIG. 7 illustrates a graph line (dot-dash line) of "#1 misfire time" and a graph line (solid line) of "#1 normal time". In the second cylinder 3B, as illustrated in FIG. 6, the crank angle signals S_{22, 23, 0, 1, 2, 3, 4} of the crank angles corresponding to the crank numbers 22, 23, 0, 1, 2, 3, and 4 in the combustion process are used for misfire detection.

As illustrated in FIG. 6, the inter-signal time Xₙ at the normal time of the second cylinder 3B when receiving the crank angle signals S_{22, 23, 0, 1, 2, 3, 4} are X_{22, 23, 0, 1, 2, 3, 4}, respectively. On the other hand, the inter-signal time Xₙ at the misfire time when receiving the crank angle signals S_{22, 23, 0, 1, 2, 3, 4} are X'_{22, 23, 0, 1, 2, 3, 4}, respectively. As the inter-signal time Xₙ in the combustion process of the second cylinder 3B, FIG. 7 illustrates a graph line (two-dot chain line) of "#2 misfire time" and a graph line (solid line) of "#2 normal time". FIG. 7 also illustrates "#1 compression top dead center" of the first cylinder 3A and "#2 compression top dead center" of the second cylinder 3B, and further illustrates the expression of the linear regression line L1 (y = a₁·X + b₁) of "#1 normal time" and the expression of the linear regression line L2 (y = a₂·X + b₂) of "#1 misfire time" by dashed lines. Furthermore, FIG. 7 illustrates an expression of a linear regression line L3 (y = a₃·X + b₃) of "#2 normal time" and an expression of a linear regression line L4 (y = a₄·X + b₄) of "#2 misfire time" by dashed lines.

The inclination calculation unit 37 creates the linear regression lines L in the combustion process of the first cylinder 3A and the second cylinder 3B by the method of least squares in the inclination calculation step S4, and calculates the inclination a of each of the linear regression lines L thereafter. The determination unit 38 determines that a misfire is caused when it is determined that the inclination a of any one of the linear regression lines L is equal to or larger than the predetermined threshold aₛ in the determination step S5, and the number of times of misfire detection n is equal to or larger than the predetermined number of times nₛ in the determination step S6. That is, when the inclination a of the linear regression line L of any one of the first cylinder 3A and the second cylinder 3B deviates from a₁ or a₃ and becomes a value close to a₂ or a₄, it is determined that any one or both of the first cylinder 3A and the second cylinder 3B have caused a misfire.

As described above, in the misfire detection device according to the present embodiment and the misfire detection method using this device, the crank position sensor 32 detects the crank angle signal Sₙ synchronized with the rotation angle of the crank shaft 6 in the crank angle signal detection step S2. Next, the ECU 31 calculates the inter-signal times Xₙ as reception intervals of the crank angle signals Sₙ based on a plurality of the crank angle signals Sₙ detected in the inter-signal time calculation step S3. The ECU 31 then detects presence/absence of a misfire based on each inter-signal time Xₙ in the combustion process in the determination step S5. In this way, the parameters used for misfire detection are limited to the inter-signal times Xₙ in the combustion process, so that the inter-signal times Xₙ in all of the processes are not required to be observed. Observation is required for only the combustion process, so that all disturbances that cause erroneous detection of a misfire are not necessarily estimated in advance, and control for prohibiting misfire detection is not necessarily performed at all times when a disturbance is caused. Thus, influence of a disturbance in misfire detection can be reduced as much as possible, so that a misfire can be detected with low cost and high accuracy.

More specifically, the inclination calculation unit 37 of the ECU 31 creates the linear regression line L when plotting each inter-signal time Xₙ in the combustion process by the method of least squares in the inclination calculation step S4, and calculates the inclination a of the linear regression line L thereafter. The determination unit 38 of the ECU 31 determines that a misfire is caused when the number of times when the inclination a of the linear regression line L calculated by the inclination calculation unit 37 is equal to or larger than the predetermined threshold aₛ is equal to or larger than the predetermined number of times nₛ in the determination step S5. In this way, by creating the linear regression line L based on each inter-signal time Xₙ and determining presence/absence of a misfire based on the inclination a, a misfire can be easily and securely detected.

As described above with reference to FIG. 7, even when the engine 1 is a two-cylinder engine, the inclination calculation unit 37 creates the linear regression lines L of the respective cylinders 3A and 3B by the method of least squares, and calculates the inclination a of each of the linear regression lines L thereafter in the inclination calculation step S4. The determination unit 38 determines that a misfire is caused when the number of times when the inclination a of any one of the linear regression lines L is equal to or larger than the threshold aₛ is equal to or larger than the predetermined number of times nₛ in the determination step S5. Due to this, even in a case of the two-cylinder engine, a misfire of each of the cylinders 3A and 3B can be detected with low cost and high accuracy by reducing influence of a disturbance in misfire detection as much as possible.

The embodiment of the present invention has been described above. The present invention is not limited to the above embodiment, but may be variously modified without departing from the scope of the present invention as defined in the appended claims. For example, the crank number N corresponding to the crank angle signal Sₙ used for misfire detection is not limited to that described in the above embodiment, and the crank number N that facilitates misfire detection in the combustion process can be appropriately selected in accordance with a processing load of the ECU 31. The present invention can also be applied to a case where the engine 1 is a multi-cylinder engine including three or more cylinders.

### Reference Signs List

- 1: engine (internal combustion engine)
- 3: cylinder
- 6: crank shaft
- 31: ECU (control unit)
- 32: crank position sensor
- 37: inclination calculation unit
- 38: determination unit
- Sₙ: crank angle signal
- Xₙ: inter-signal time
- L: linear regression line
- a: inclination
- aₛ: threshold
- nₛ: predetermined number
- S2: crank angle signal detection step
- S3: inter-signal time calculation step
- S4: inclination calculation step
- S5: determination step

## Claims

1. A misfire detection device of an internal combustion engine (1), the misfire detection device being for detecting presence/absence of a misfire in the internal combustion engine (1) in which respective processes of intake, compression, combustion, and exhaust are performed in a cylinder (3) due to rotation of a crank shaft (6), the misfire detection device comprising:
a crank position sensor (32) detecting a crank angle signal (Sₙ) synchronized with a rotation angle of the crank shaft (6); and
a control unit (31) calculating, based on a plurality of the crank angle signals (Sₙ) detected by the crank position sensor (32), a plurality of inter-signal times (Xₙ) as reception intervals of the crank angle signals (Sₙ), wherein
the control unit detects presence/absence of the misfire based on the inter-signal times (Xₙ) in the combustion process,
**characterized in that**
the control unit (31) comprises:
an inclination calculation unit (37) calculating an inclination (a) of a linear regression line (L) when being plotted with each of the inter-signal times (Xₙ) in the combustion process as a vertical axis and a time as a horizontal axis; and
a determination unit (38) determining that the misfire is caused when the number of times (n) when the inclination (a) of the linear regression line (L) calculated by the inclination calculation unit (37) is equal to or larger than a predetermined threshold (aₛ) is equal to or larger than a predetermined number of times (nₛ).

2. The misfire detection device of the internal combustion engine (1) according to claim 1, wherein
the internal combustion engine (1) includes a plurality of the cylinders (3),
the inclination calculation unit (37) calculates the inclination (a) of the linear regression line (L) of each of the cylinders (3), and
the determination unit (38) determines that the misfire is caused when the number of times (n) when the inclination (a) of any one of the linear regression lines (L) is equal to or larger than the threshold (aₛ) is equal to or larger than the predetermined number of times (nₛ).

3. The misfire detection device of the internal combustion engine (1) according to claim 1 or 2, wherein the inclination calculation unit (37) creates the linear regression line (L) by a method of least squares.

4. A misfire detection method of an internal combustion engine (1), the misfire detection method being for detecting presence/absence of a misfire in the internal combustion engine (1) in which respective processes of intake, compression, combustion, and exhaust are performed in a cylinder (3) due to rotation of a crank shaft (6), the method comprising:
a crank angle signal detection step (S2) of detecting a crank angle signal (Sₙ) synchronized with a rotation angle of the crank shaft (6);
an inter-signal time calculation step (S3) of calculating, based on a plurality of the crank angle signals (Sₙ) detected in the crank angle signal detection step (S2), a plurality of inter-signal times (Xₙ) as reception intervals of the crank angle signals (Sₙ); and
a determination step (S5) of determining presence/absence of the misfire based on each of the inter-signal times (Xₙ) in the combustion process calculated in the inter-signal time calculation step (S3),
**characterized in that**
the method further comprises:
an inclination calculation step (S4) of calculating an inclination (a) of a linear regression line (L) when being plotted with each of the inter-signal times (Xₙ) in the combustion process as a vertical axis and a time as a horizontal axis, wherein
in the determination step (S5), it is determined that the misfire is caused when the number of times (n) when the inclination (a) of the linear regression line (L) calculated in the inclination calculation step (S4) is equal to or larger than a predetermined threshold (aₛ) is equal to or larger than a predetermined number of times (nₛ).

5. The misfire detection method of the internal combustion engine (1) according to claim 4, wherein
the internal combustion engine (1) includes a plurality of the cylinders (3),
the inclination (a) of the linear regression line (L) of each of the cylinders (3) is calculated in the inclination calculation step (S4), and
it is determined that the misfire is caused when the number of times (n) when the inclination (a) of any one of the linear regression lines (L) is equal to or larger than the threshold (aₛ) is equal to or larger than the predetermined number of times (nₛ) in the determination step (S5).

6. The misfire detection method of the internal combustion engine (1) according to claim 4 or 5, wherein the linear regression line (L) is created by a method of least squares in the inclination calculation step (S4).

## Patentansprüche

1. Eine Vorrichtung zur Erkennung von Zündaussetzern bei einem Verbrennungsmotor (1), wobei die Vorrichtung zur Erkennung von Zündaussetzern dazu dient, das Vorhandensein bzw. Fehlen eines Zündaussetzers in dem Verbrennungsmotor (1) zu erkennen, in dem aufgrund der Drehung einer Kurbelwelle (6) in einem Zylinder (3) die jeweiligen Vorgänge des Einlass-, Kompressions-, Verbrennungs- und Auslassvorgangs ablaufen, wobei die Vorrichtung zur Erkennung von Zündaussetzern umfasst:
einen Kurbelwellensensor (32), der ein mit dem Drehwinkel der Kurbelwelle (6) synchronisiertes Kurbelwinkelsignal (Sₙ) erfasst; und
eine Steuereinheit (31), die auf der Grundlage einer Vielzahl der vom Kurbelwellensensor (32) erfassten Kurbelwinkelsignale (Sₙ) eine Vielzahl von Signalabständen (Xₙ) als Empfangsintervalle der Kurbelwinkelsignale (Sₙ) berechnet, wobei
die Steuereinheit das Vorhandensein bzw. Fehlen der Fehlzündung auf der Grundlage der Signalabstände (Xₙ) im Verbrennungsprozess erfasst,
**dadurch gekennzeichnet, dass**
die Steuereinheit (31) umfasst:
eine Steigungsberechnungseinheit (37), die eine Steigung (a) einer linearen Regressionsgeraden (L) berechnet, wenn diese mit jeder der Signalintervalle (Xₙ) im Verbrennungsprozess als vertikaler Achse und einer Zeit als horizontaler Achse aufgetragen wird; und
eine Bestimmungseinheit (38), die feststellt, dass eine Fehlzündung vorliegt, wenn die Anzahl (n) der Fälle, in denen die von der Neigungsberechnungseinheit (37) berechnete Steigung (a) der linearen Regressionsgeraden (L) gleich oder größer als ein vorbestimmter Schwellenwert (aₛ) ist, gleich oder größer als eine vorbestimmte Anzahl (nₛ) ist.

2. Die Vorrichtung zur Erkennung von Zündaussetzern bei einem Verbrennungsmotor (1) nach Anspruch 1, wobei
der Verbrennungsmotor (1) mehrere Zylinder (3) umfasst,
die Neigungsberechnungseinheit (37) die Steigung (a) der linearen Regressionsgeraden (L) für jeden der Zylinder (3) berechnet, und
die Bestimmungseinheit (38) feststellt, dass eine Fehlzündung vorliegt, wenn die Anzahl (n), bei der die Steigung (a) einer der linearen Regressionsgeraden (L) gleich oder größer als der Schwellenwert (aₛ) ist, gleich oder größer als die vorgegebene Anzahl (nₛ) ist.

3. Die Vorrichtung zur Erkennung von Zündaussetzern bei einem Verbrennungsmotor (1) nach Anspruch 1 oder 2, wobei die Neigungsberechnungseinheit (37) die lineare Regressionsgerade (L) nach dem Verfahren der kleinsten Quadrate erstellt.

4. Ein Verfahren zur Fehlzündungserkennung bei einem Verbrennungsmotor (1), wobei das Verfahren zur Erkennung des Vorhandenseins bzw. Fehlens einer Fehlzündung in dem Verbrennungsmotor (1) dient, in dem aufgrund der Drehung einer Kurbelwelle (6) in einem Zylinder (3) die jeweiligen Vorgänge des Einlass-, Kompressions-, Verbrennungs- und Auslassvorgangs durchgeführt werden, wobei das Verfahren umfasst:
einen Kurbelwinkelsignal-Erfassungsschritt (S2) zum Erfassen eines Kurbelwinkelsignals (Sₙ), das mit einem Drehwinkel der Kurbelwelle (6) synchronisiert ist;
einen Signalintervall-Berechnungsschritt (S3), bei dem auf der Grundlage einer Vielzahl der im Kurbelwinkelsignal-Erfassungsschritt (S2) erfassten Kurbelwinkelsignale (Sₙ) eine Vielzahl von Signalintervallen (Xₙ) als Empfangsintervalle der Kurbelwinkelsignale (Sₙ) berechnet wird; und
einen Bestimmungsschritt (S5) zum Bestimmen des Vorhandenseins bzw. Fehlens der Fehlzündung auf der Grundlage jeder der im Signalintervall-Berechnungsschritt (S3) berechneten Signalintervalle (Xₙ) im Verbrennungsprozess,
**dadurch gekennzeichnet, dass**
das Verfahren ferner umfasst:
einen Steigungsberechnungsschritt (S4) zum Berechnen einer Steigung (a) einer linearen Regressionsgeraden (L), wenn diese mit jeder der Signalintervalle (Xₙ) im Verbrennungsprozess als vertikaler Achse und der Zeit als horizontaler Achse aufgetragen wird, wobei
im Bestimmungsschritt (S5) festgestellt wird, dass eine Fehlzündung vorliegt, wenn die Anzahl (n) der Fälle, in denen die im Steigungsberechnungsschritt (S4) berechnete Steigung (a) der linearen Regressionsgeraden (L) gleich oder größer als ein vorbestimmter Schwellenwert (aₛ) ist, gleich oder größer als eine vorbestimmte Anzahl (nₛ) ist.

5. Das Verfahren zur Erkennung von Fehlzündungen bei einem Verbrennungsmotor (1) nach Anspruch 4, wobei
der Verbrennungsmotor (1) mehrere Zylinder (3) umfasst,
die Steigung (a) der linearen Regressionsgeraden (L) für jeden der Zylinder (3) im Steigungsberechnungsschritt (S4) berechnet wird, und
im Bestimmungsschritt (S5) festgestellt wird, dass eine Fehlzündung vorliegt, wenn die Anzahl (n) der Fälle, in denen die Steigung (a) einer der linearen Regressionsgeraden (L) gleich oder größer als der Schwellenwert (aₛ) ist, gleich oder größer als die vorgegebene Anzahl (nₛ) ist.

6. Das Verfahren zur Erkennung von Fehlzündungen bei einem Verbrennungsmotor (1) nach Anspruch 4 oder 5, wobei die lineare Regressionsgerade (L) im Steigungsberechnungsschritt (S4) mittels eines Verfahrens der kleinsten Quadrate erstellt wird.

## Revendications

1. Dispositif de détection de ratés d'allumage d'un moteur à combustion interne (1), le dispositif de détection de ratés d'allumage servant à détecter la présence ou l'absence d'un raté d'allumage dans le moteur à combustion interne (1) dans lequel différents processus d'admission, de compression, de combustion et d'échappement sont réalisés dans un cylindre (3) sous l'effet de la rotation d'un vilebrequin (6), le dispositif de détection de ratés d'allumage comprenant :
un capteur de position de vilebrequin (32) qui détecte un signal d'angle de vilebrequin (Sₙ) synchronisé avec l'angle de rotation du vilebrequin (6), et
une unité de commande (31) qui calcule, en fonction d'une pluralité de signaux d'angle de vilebrequin (Sₙ) détectés par le capteur de position de vilebrequin (32), une pluralité de durées inter-signaux (Xₙ) correspondant à des intervalles de réception des signaux d'angle de vilebrequin (Sₙ) ;
ladite unité de commande détectant la présence ou l'absence d'un raté d'allumage en fonction des durées inter-signaux (Xₙ) produites au cours du processus de combustion ;
**caractérisé en ce que**
l'unité de commande (31) comprend :
une unité de calcul d'inclinaison (37) calculant l'inclinaison (a) d'une ligne de régression linéaire (L) tracée avec chacune des durées inter-signaux (Xₙ) produites au cours du processus de combustion sur l'axe vertical et le temps sur l'axe horizontal, et
une unité de détermination (38) déterminant qu'un raté d'allumage se produit lorsque le nombre de fois (n) où l'inclinaison (a) de la ligne de régression linéaire (L), calculée par l'unité de calcul d'inclinaison (37), est supérieure ou égale à un seuil prédéterminé (aₛ) est supérieur ou égal à un nombre prédéterminé de fois (nₛ).

2. Dispositif de détection de ratés d'allumage d'un moteur à combustion interne (1) selon la revendication 1, dans lequel
le moteur à combustion interne (1) comprend une pluralité de cylindres (3),
l'unité de calcul d'inclinaison (37) calcule l'inclinaison (a) de la ligne de régression linéaire (L) de chacun des cylindres (3), et
l'unité de détermination (38) détermine qu'un raté d'allumage se produit lorsque le nombre de fois (n) où l'inclinaison (a) de l'une quelconque des lignes de régression linéaire (L) est supérieure ou égale au seuil (aₛ) est supérieur ou égal au nombre prédéterminé de fois (nₛ).

3. Dispositif de détection de ratés d'allumage d'un moteur à combustion interne (1) selon la revendication 1 ou 2, dans lequel l'unité de calcul d'inclinaison (37) crée la ligne de régression linéaire (L) selon la méthode des moindres carrés.

4. Procédé de détection de ratés d'allumage d'un moteur à combustion interne (1), le procédé de détection de ratés d'allumage servant à détecter la présence ou l'absence d'un raté d'allumage dans le moteur à combustion interne (1) dans lequel différents processus d'admission, de compression, de combustion et d'échappement sont réalisés dans un cylindre (3) sous l'effet de la rotation d'un vilebrequin (6), le procédé comprenant :
une étape de détection de signal d'angle de vilebrequin (S2) consistant à détecter un signal d'angle de vilebrequin (Sₙ) synchronisé avec un angle de rotation du vilebrequin (6),
une étape de calcul de durées inter-signaux (S3) consistant à calculer, en fonction d'une pluralité de signaux d'angle de vilebrequin (Sₙ) détectés lors de l'étape de détection de signal d'angle de vilebrequin (S2), une pluralité de durées inter-signaux (Xₙ) correspondant à des intervalles de réception des signaux d'angle de vilebrequin (Sₙ), et
une étape de détermination (S5) consistant à déterminer la présence ou l'absence d'un raté d'allumage en fonction de chacune des durées inter-signaux (Xₙ) produites au cours du processus de combustion et calculées lors de l'étape de calcul de durées inter-signaux (S3) ;
**caractérisé en ce que**
le procédé comprend en outre :
une étape de calcul d'inclinaison (S4) consistant à calculer l'inclinaison (a) d'une ligne de régression linéaire (L) tracée avec chacune des durées inter-signaux (Xₙ) produites au cours du processus de combustion sur l'axe vertical et le temps sur l'axe horizontal, étant entendu que
lors d'une étape de détermination (S5), il est déterminé que le raté d'allumage se produit lorsque le nombre de fois (n) où l'inclinaison (a) de la ligne de régression linéaire (L), calculée lors de l'étape de calcul d'inclinaison (S4), est supérieure ou égale à un seuil prédéterminé (aₛ), est supérieur ou égal à un nombre prédéterminé de fois (nₛ).

5. Procédé de détection de ratés d'allumage d'un moteur à combustion interne (1) selon la revendication 4, dans lequel
le moteur à combustion interne (1) comprend une pluralité de cylindres (3),
l'inclinaison (a) de la ligne de régression linéaire (L) de chacun des cylindres (3) est calculée lors de l'étape de calcul d'inclinaison (S4), et
il est déterminé que le raté d'allumage se produit lorsque le nombre de fois (n) où l'inclinaison (a) de l'une quelconque des lignes de régression linéaire (L) est supérieure ou égale au seuil (aₛ) est supérieur ou égal au nombre prédéterminé de fois (nₛ) lors de l'étape de détermination (S5).

6. Procédé de détection de ratés d'allumage d'un moteur à combustion interne (1) selon la revendication 4 ou 5, dans lequel la ligne de régression linéaire (L) est créée selon la méthode des moindres carrés lors de l'étape de calcul d'inclinaison (S4).
